# EUROPEAN PATENT APPLICATION

(11) **EP 1 924 089 A2**
(43) Date of publication of application: **21.05.2008**
(21) Application number: 07114538.7
(22) Date of filing: 17.08.2007
(51) Int. Cl.: H04N 5/445, H04N 5/92

(54) **Content playback**

(30) Priority: 20.11.2006 KR 20060114350
(71) Applicant: Samsung Electronics Co., Ltd., Suwon-si, Gyeonggi-do 442-742 (KR)
(72) Inventor: Shin, Suk-young, Gyeonggi-do (KR)
(74) Representative: Pisani, Diana Jean

(57) **Abstract**

An audio/video (A/V) apparatus (200) for playing back content includes a graphical user interface (GUI) (230), for presenting information on a display (260), and a controller (250) for controlling the GUI (230) to a first graphic, such as a navigation bar, indicating a playback position of content being displayed and a second graphic, that provides an enlarged view, such as a zoom-in bar, of the portion of the first graphic that includes the current playback position. The enlarged bar portion permits a user to adjust the playback position accurately and quickly, as fine adjustment can be performed using the zoom-in function.

## Description

The present invention relates to an audio/video (A/V) apparatus and a display method for an A/V apparatus.
Generally, broadcast receiving apparatuses are audio/video (A/V) apparatuses that convert digital broadcasting or analog broadcasting transmitted from broadcasting stations and video and audio signals received from various external apparatuses (for example, video players, digital video disk (DVD) players, or other apparatuses) into transport stream (TS) signals. The converted signals are transmitted to display devices. One example of such a broadcast receiving apparatus is a set-top box. The term set-top box describes a device that can be connected to a television and an external source of a signal.

Set-top boxes turn the signal into content that can be displayed on a screen. The signal source can be an ethernet cable, a satellite dish, a coaxial cable, a television line, or even an ordinary very high frequency or ultra high frequency antenna. Content, in this case, can be any or all of video, audio, Internet webpages, interactive games and other material.

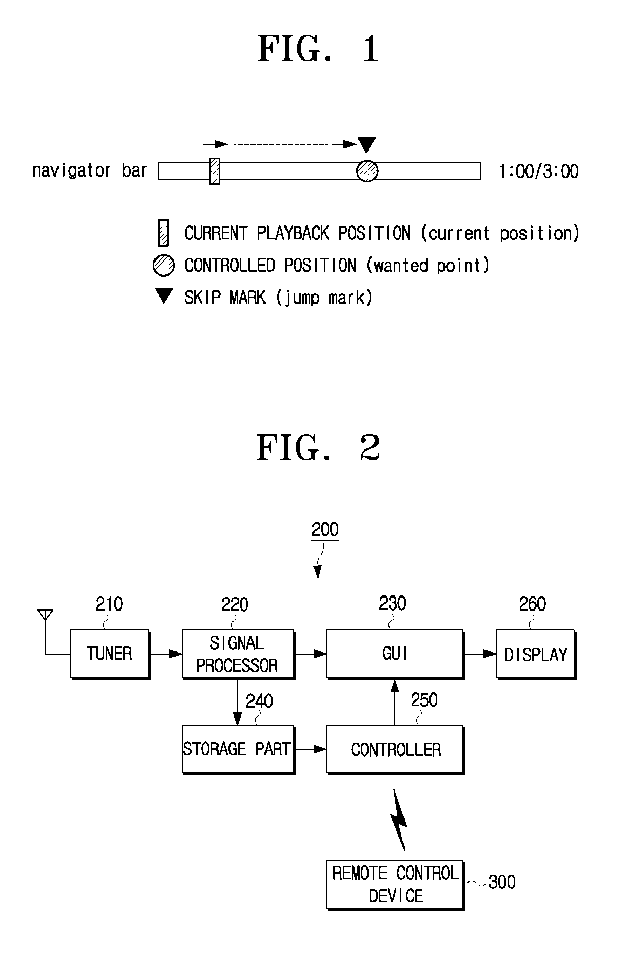

When content is played back on a conventional A/V apparatus, a navigation bar may be displayed on the screen displaying the content. The navigation bar indicates the playback point, in other words, the position of the content currently being played back relative to the total duration of the content available for playback. The navigation bar of a conventional A/V apparatus is shown in FIG. 1.

A user operates direction buttons to set the current playback position displayed on the navigation bar to a desired position, in order to play back another part of the content. In other words, when a user operates control buttons, such as fast forward, rewind, skip, or other buttons, the content currently being played back may be set to a desired playback point.

When a user controls the content being played back using the skip button in the conventional A/V apparatus, the actual playback point may be set to a position adjacent to the desired point, but it is difficult to instantly move the current playback position to the exact point desired. Where the amount of content available for playback is considerable, the time interval between the adjacent playback positions may be large, and thus it is more difficult to set the current position of the content to the desired point.

Accordingly, a need exists for an apparatus for and method of accurately and quickly moving a desired playback position in an audio/video apparatus.

An object of the present invention is the provision of an audio/video (A/V) apparatus and a display method for the A/V apparatus that provide a zoom-in bar for dividing a reference interval into fine adjustment intervals and for magnifying the fine adjustment intervals so that a user may more accurately move the playback position and, thus, content currently being played back, to a desired position.

According to an aspect of the invention, an A/V apparatus comprises a graphical user interface (GUI) for displaying display information on a screen, and a controller for controlling the GUI to display a second graphic, which is generated by enlarging a partial interval of a first graphic indicating a current playback position, as the display information.
The controller may control the GUI to display the first graphic and the second graphic simultaneously.

The controller may determine fine adjustment intervals based on a reference interval corresponding to a set magnification scale, and control the GUI to display the fine adjustment intervals.

Additionally, the controller may set a reference interval according to the magnification scale and determine fine adjustment intervals based on the set reference interval.

The controller may determine whether the magnification scale is set to the fixed scale when a magnification command is input through a remote control device. The controller may set a reference interval corresponding to the fixed scale by dividing a reference interval corresponding to a scale of 1:1 using the fixed scale, and determine fine adjustment intervals based on the set reference interval, when it is determined that the magnification scale is set to the fixed scale.

The controller may determine fine adjustment intervals using a preset reference interval corresponding to an automatic scale, when it is determined that the magnification scale is set to the automatic scale.

The controller may divide the set reference interval by a preset interval adjustment value to determine fine adjustment intervals when it is determined that the magnification scale is set to the fixed scale, and may divide the reference interval corresponding to the automatic scale by the interval adjustment value to determine fine adjustment intervals when it is determined that the magnification scale is set to the automatic scale.

The reference interval may contain a previous interval and a next interval within a predetermined range from the position of the content currently being played back. The controller may control the GUI so that the reference interval is magnified to show a plurality of fine adjustment intervals as display information.

This aspect also provides a display method for an A/V apparatus that comprises displaying display information on a screen and displaying a second graphic, which is generated by enlarging a partial interval of a first graphic indicating a current playback position, as the display information.

The method may comprise displaying the first graphic simultaneously with second graphic.

The displaying the second graphic may comprise determining fine adjustment intervals based on a reference interval corresponding to a set magnification scale, and displaying the fine adjustment intervals.

Additionally, the displaying the second graphic may comprise setting a reference interval differently according to the magnification scale and determining the fine adjustment intervals based on the set reference interval.

The displaying the second graphic may comprise determining whether the magnification scale is set to the fixed scale when a magnification command is input through a remote control device. A reference interval corresponding to the fixed scale is set by dividing a reference interval corresponding to a scale of 1:1 using the fixed scale, and determining fine adjustment intervals based on the set reference interval when it is determined that the magnification scale is set to the fixed scale. The fine adjustment intervals are determined using a preset reference interval corresponding to an automatic scale when it is determined that the magnification scale is set to the automatic scale.

The determining the fine adjustment intervals may comprise dividing the set reference interval by a preset interval adjustment value to determine fine adjustment intervals when it is determined that the magnification scale is set to the fixed scale. The reference interval corresponding to the automatic scale is divided by the interval adjustment value to determine fine adjustment intervals when it is determined that the magnification scale is set to the automatic scale.

The reference interval may contain a previous interval and a next interval within a predetermined range from the position of the content currently being played back. The displaying the second graphic may comprise magnifying the reference interval to show a plurality of fine adjustment intervals as display information.

Other objects, advantages and salient features of the invention will become apparent from the following detailed description which, taken in conjunction with the annexed drawings, discloses example embodiments of the invention.

The example embodiments will be described with reference to the accompanying drawings, in which:
FIG. 1 illustrates a navigation bar displayed by a conventional A/V apparatus;
FIG. 2 is a block diagram of an A/V apparatus according to an embodiment of the present invention;
FIG. 3 is a flowchart explaining a example of a method for operating the A/V apparatus of FIG. 2; and
FIG. 4 illustrates an enlarged view of a navigation bar provided in the A/V apparatus of FIG. 2.

Throughout the drawings and following detailed description, like reference numerals refer to like parts, components and structures.

The following detailed description of embodiments, such as a detailed construction and elements thereof, are provided to assist in a comprehensive understanding of the invention and are merely examples demonstrating how the invention can be implemented. Accordingly, those of ordinary skill in the art will recognize that various changes and modifications of the exemplary embodiments described herein can be made without departing from the scope of the invention. Descriptions of well-known functions and constructions are omitted for clarity and conciseness.

FIG. 2 is a block diagram of an A/V apparatus according to an embodiment of the present invention. The A/V apparatus 200 comprises a tuner 210, a signal processor 220, a graphical user interface (GUI) 230, a storage part 240 and a controller 250.

The tuner 210 receives a broadcasting signal, corresponding to a channel selected by a user, from a broadcasting station and tunes to the channel.

The signal processor 220 processes various broadcasting signals output from the tuner 210, separates the signals into a video signal, an audio signal, and a data signal, and performs image processing so that an image may be displayed.

The GUI 230 enables a user to interact with the A/V apparatus 200, and generates a PARC user interface (PUI) corresponding to user commands received through a manipulation part (not illustrated) or a remote control device 300 and a GUI corresponding to user commands input through a selection from icons or menus displayed on a display 260. Next, the GUI 230 displays the generated PUI and GUI on the display 260. The remote control device 300 may be a remote controller, but is not necessarily limited thereto.

The GUI 230 combines display information, such as characters, symbols, diagrams, or graphics, with the image output from the signal processor 220 or the content read from the storage part 240. The GUI 230 may combine the display information using an on screen display (OSD) method, but the method is not necessarily limited thereto. The operation of combining the display information of the GUI 230 may be controlled by the controller 250.

In this particular example, the GUI 230 combines the display information with the image output from the signal processor 220 and displays the combined information on the display 260. The GUI 230 displays a navigation bar and a zoom-in bar, that is, an enlarged portion of the navigation bar, as display information under the control of the controller 250. The navigation bar and zoom-in bar may be placed on the bottom of the screen displaying the image and the zoom-in bar may be placed above the navigation bar, but the present invention is not necessarily limited in this manner.

The navigation bar identifies the position of content currently being played back on the display part 260, with respect to the duration of the content available for playback, and the zoom-in bar indicates fine adjustment intervals obtained by dividing a reference interval of the navigation bar by a preset interval adjustment value. The GUI 230 displays the zoom-in bar, in which the characters, symbols and diagrams are combined with the graphics indicating the position of content being played back, as display information on the display 260.

The storage part 240 stores various programs and content required to control the A/V apparatus 200. The content, in this case, may mean any or all of video, audio, Internet webpages, interactive games, and other material.

When a zoom command is input through the remote control device 300 or the manipulation part (not illustrated) included in the A/V apparatus 200, the controller 250 determines whether the magnification scale is set to a fixed scale. If it is determined that the magnification scale is set to a fixed scale, the controller 250 sets a reference interval corresponding to the fixed scale. For example, the reference interval corresponding to a fixed scale of 1:1 may be preset, and so, in this particular case, the controller 250 may set a reference interval according to a scale selected from among fixed scales, such as 2:1, 4:1, 6:1, and 8:1, based on the reference interval corresponding to a scale of 1:1.

The controller 250 controls the GUI 230 so that the zoom-in bar, which divides a set reference interval into fine adjustment intervals and magnifies the fine adjustment intervals, is displayed on the display 260. The reference interval contains a previous interval and a next interval within a predetermined range from the position of the content currently being played back, and may be set differently according to the magnification scale.

The magnification scale may be set to a fixed scale, such as 1:1, 2:1, 4:1, 6:1, and 8:1 or an automatically set scale. A user may set the magnification scale to one of the fixed scales or an automatically set scale and a reference interval corresponding to the automatically set scale may be preset based on the total playback time of the content being played back.

Specifically, when a user operates magnification keys on the remote control device 300 or the manipulation part (not illustrated) to input the magnification command, the controller 250 may divide the reference interval corresponding to the set magnification scale by the preset interval adjustment value to determine fine adjustment intervals. Additionally, the controller 250 may control the GUI 230 to show the fine adjustment intervals as the display information on the display part 260.

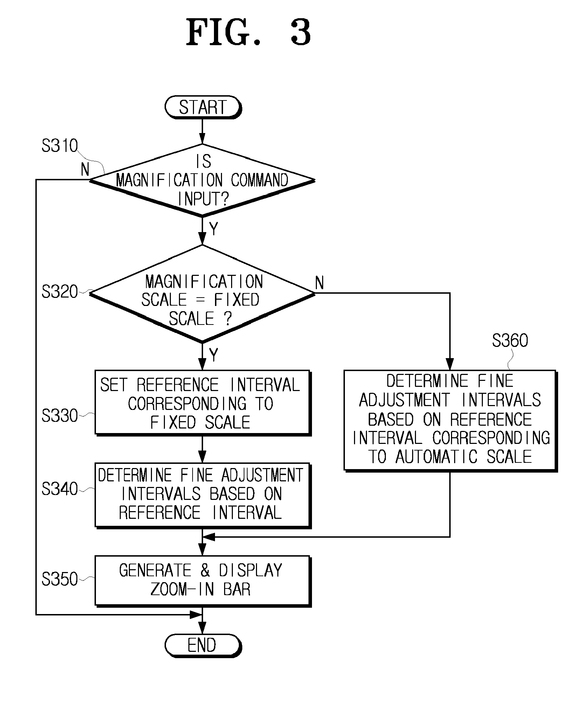

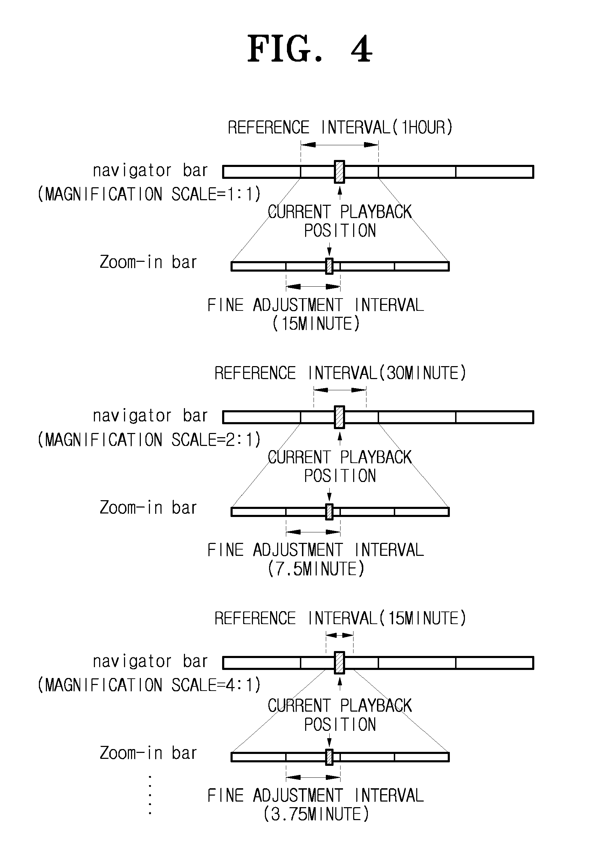

FIG. 3 is a flowchart of an example method for operating the A/V apparatus of FIG. 2. FIG. 4 is an view illustrating a zoom-in bar provided by the A/V apparatus of FIG. 2.

In FIGS. 3 and 4, when a magnification command is input through the remote control device 300 or the manipulation part (not illustrated) included in the A/V apparatus 200 in operation S310-Y, the controller 250 determines whether the magnification scale is set to a fixed scale in operation S320. The magnification scale may be set by a user.

If it is determined that the magnification scale is set to a fixed scale, the controller 250 sets a reference interval according to the fixed scale, such as 2:1, 4:1, 6:1, and 8:1, in operation S330. The reference interval includes a previous interval and a next interval within a predetermined range of the current playback position, and may be set according to the magnification scale.

For example, referring to FIG. 4, if the reference interval corresponding to a scale of 1:1 is set to 1 hour and the fixed scale is set to 2:1, the controller 250 may divide the reference interval to set a reference interval of 30 minutes. If the magnification scale is set to 4:1, the controller 250 may divide the reference interval to set a reference interval of 15 minutes. In the same manner, the controller 250 may divide the reference interval corresponding to a scale of 1:1 by a scale of n:1, to set a reference interval corresponding to a scale of n:1.

The controller 250 divides the set reference interval by the preset interval adjustment value to determine fine adjustment intervals in operation S340. Continuing with the final example shown in FIG. 4, if the interval adjustment value corresponds to a scale of 4:1, the controller 250 may divide a reference interval of 1 hour by the interval adjustment value to determine fine adjustment intervals so that each fine adjustment interval may correspond to 15 minutes. If the magnification scale is set to a scale of 2:1, as in the second example of FIG. 4, the controller 250 may divide the reference interval of 30 minutes at a scale of 2:1 using an interval adjustment value corresponding to a scale of 4:1 to set the fine adjustment interval to 7.5 minutes. In the same manner, the controller 250 may determine fine adjustment intervals corresponding to a scale of 1:1 to a scale of n:1.

Next, the controller 250 controls the GUI 230 so that the zoom-in bar, in which the reference interval is divided into the fine adjustment intervals and the fine adjustment intervals are magnified, are presented on the display 260 in operation S350. The controller 250 controls the GUI 230 to combine the determined fine adjustment intervals with characters, symbols, diagrams, or graphics to generate a zoom-in bar for display..

The controller 250 may be arranged to to control the GUI 230 so that the navigation bar appears translucent when displayed and/or the zoom-in bar is no longer displayed on the display 260 once a preset predetermined period of time has elapsed.

If it is determined that the magnification scale is to be set automatically, in operation S320-N, the controller 250 may determine fine adjustment intervals, using a preset reference interval corresponding to the automatically set scale and the interval adjustment value, in operation S360.

In other words, the controller 250 divides the reference interval corresponding to the automatically set scale by the interval adjustment value to determine fine adjustment intervals. The reference interval corresponding to the automatically set scale is predetermined, based on the total playback time of the content.

The controller 250 controls the GUI 230 to combine the determined fine adjustment intervals with characters, symbols, diagrams, or graphics, to generate a zoom-in bar, and to display the zoom-in bar on the display260 in operation S350.

When a user changes the current playback position of the content using the zoom-in bar, the controller 250 displays content corresponding to the new playback position on the display 260. For example, if the current playback position of the content is 10 and a user wishes to change the playback position to 25 and inputs a position control command through the remote control device 300, the controller 250 controls the GUI 230 to display a graphic indicating that the current playback position as the position 25 requested by the user, and to display content corresponding to the requested position.

In the above described embodiments of the present invention, although the zoom command is received through a remote control device 300 and a manipulation part (not illustrated) is included in the A/V apparatus, the present invention is not limited in this manner. For example, the A/V apparatus may be arranged so that a zoom command can be received through a selection from magnification icons or magnification menus presented on the display 260 by the GUI 230.

Additionally, the above described embodiments relate to an A/V apparatus and a display method therefore, in which an enlarged bar portion is provided for user control of content playback. However, the present invention is not necessarily limited in this manner and the enlarged bar portion may be implemented in all playback apparatuses capable of playing back content, such as digital televisions (TVs), camcorders, digital cameras, personal digital assistants (PDAs), personal computers (PCs), cellular phones and other devices.

Furthermore, in the example embodiments of A/V apparatuses and display discussed above, the navigation bar and enlarged bar portion are displayed graphically in the form of a bar. However, the present invention is not limited in this manner, and the information conveyed by the navigation bar and enlarged bar portion may be presented in other forms.

As described above, according to the example embodiment of the present invention, the enlarged bar portion is provided so that a user may move the playback point of the content currently being played back to a desired position more accurately and quickly, and may perform fine adjustment of the playback point conveniently, through use of the zoom-in function.

The foregoing embodiments and advantages are merely examples and are not to be construed as limiting the present invention. The present teaching can be readily applied to other types of apparatuses. Also, the description of the embodiments of the present invention is intended to be illustrative and not to limit the scope of the claims, and many alternatives, modifications, and variations will be apparent to those skilled in the art.

## Claims

1. An content playback apparatus, comprising:
a graphical user interface arranged to present display information on a screen; and
a controller arranged to control the GUI to present first display information, indicating a current playback position of said content and second display information, wherein the second display information provides a magnified image based on a portion of the first display information that indicates the current playback position.

2. An apparatus according to claim 1, wherein the controller controls the GUI to present the first and second display information simultaneously.

3. An apparatus according to claim 1 or 2, wherein the controller is arranged to determine fine adjustment intervals based on a reference interval corresponding to a set magnification scale, and to control the GUI to display the fine adjustment intervals.

4. An apparatus according to claim 3, wherein the controller is arranged to set a reference interval in accordance with the magnification scale and to determine the fine adjustment intervals based on the set reference interval.

5. An apparatus according to claim 3, wherein the controller is arranged to:
determine whether the magnification scale is set to a fixed scale, in response to a magnification command;
respond to a positive determination by setting a reference interval corresponding to the fixed scale, by dividing a reference interval corresponding to a scale of 1:1 using the fixed scale and determine fine adjustment intervals based on the set reference interval when it is determined that the magnification scale is set to the fixed scale; and
respond to a negative determination by determining fine adjustment intervals using a preset reference interval corresponding to an automatically set scale.

6. An apparatus according to claim 5, wherein the controller is arranged to divide the set reference interval by a preset interval adjustment value to determine fine adjustment intervals in response to a positive determination and to divide the reference interval corresponding to the automatic scale by the interval adjustment value to determine fine adjustment intervals in response to a negative determination.

7. An apparatus according to any of claims 3 to 6, wherein the reference interval contains an interval that precedes the interval including the current playback position and an interval that succeeds the interval including the current playback position.

8. An apparatus according to any of claims 3 to 7, wherein the controller is arranged to control the GUI so that the reference interval is presented as including a plurality of fine adjustment intervals.

9. A display method for a content playback apparatus, the method comprising:
displaying first display information indicating a current playback position of said content; and
displaying second display information, wherein the second display information provides a magnified image based on a portion of the first display information that indicates the current playback position.

10. A method according to claim 9, wherein said first and second display information are displayed simultaneously.

11. A method according to claim 9 or 10, comprising determining fine adjustment intervals based on a reference interval corresponding to a set magnification scale, and showing the fine adjustment intervals within the second display information.

12. A method according to claim 11, comprising setting the reference interval in accordance with the magnification scale, wherein the fine adjustment intervals are determined based on the set reference interval.

13. A method according to claim 11, comprising:
determining whether the magnification scale is set to the fixed scale, when a magnification command is input through a remote control device;
setting a reference interval corresponding to the fixed scale by dividing a reference interval corresponding to a scale of 1:1 using the fixed scale and determining fine adjustment intervals based on the set reference interval when it is determined that the magnification scale is set to the fixed scale; and
determining the fine adjustment intervals using a preset reference interval corresponding to an automatic scale when it is determined that the magnification scale is set to the automatic scale.

14. A method according to claim 13, wherein determining the fine adjustment intervals comprises:
dividing the set reference interval by a preset interval adjustment value to determine fine adjustment intervals when it is determined that the magnification scale is set to the fixed scale; and
dividing the reference interval corresponding to the automatic scale by the interval adjustment value to determine fine adjustment intervals when it is determined that the magnification scale is set to the automatic scale.

15. A method according to any of claims 11 to 14, wherein the reference interval contains a previous interval and a next interval within a predetermined range from the position of the content currently being played back.

16. A method according to any of claims 11 to 14, wherein the displaying the second graphic comprises enlarging the reference interval to show a plurality of fine adjustment intervals.

17. A method according to any of claims 9 to 16, comprising:
receiving a signal with a tuner;
processing the received signal to create an image;
displaying the image on the screen.
